# EUROPEAN PATENT APPLICATION

(11) **EP 4 667 080 A1**
(43) Date of publication of application: **24.12.2025**
(21) Application number: 24020201.0
(22) Date of filing: 18.06.2024
(51) Int. Cl.: B01D 19/00

(54) **METHOD AND APPARATUS FOR TREATING A HETEROGENOUS MIXTURE OF A GAS AND A LIQUID**

(71) Applicant: Linde GmbH, 82049 Pullach (DE)
(72) Inventor: Dietzen, Markus, 82049 Pullach (DE); Flegiel, Felix, 82049 Pullach (DE); Lauchner, Daniela, 82049 Pullach (DE)
(74) Representative: Meilinger, Claudia Sabine

(57) **Abstract**

A method of treating a heterogeneous mixture comprising a gas and a liquid is proposed, wherein the method comprises the steps of subjecting the heterogeneous mixture or a part thereof to a first separation step using a first separation unit (1) and thereafter to a second separation step using a second separation unit (2), producing a remainder depleted in the gas and comprising at least a part of the liquid of the heterogeneous mixture, passing the remainder or a part thereof to a pump feed reservoir (4), and pumping the remainder from the pump feed reservoir (4), wherein the first separation step removes a first part of the gas from the heterogeneous mixture and the second separation step removes a second part of the gas from the heterogeneous mixture. Corresponding apparatus (100, 200) is also proposed.

## Description

The present invention relates to a method for treating a heterogenous mixture comprising a gas and a liquid and to corresponding apparatus.

### Background

The electrochemical production of hydrogen via electrolysis of water using electrolysis cells with proton exchange membranes (PEM electrolysis) is well known. Proton exchange membranes used in PEM electrolysis are solid polymer electrolytes which serve the purpose of conducting protons, separating the product gases, and electrically insulating the anode and cathode sides from each other.

PEM electrolysis can overcome some of the problems associated with partial load operation and the low possible current densities that occur in conventional alkaline electrolysis (AEL). However, while the present disclosure focusses on PEM electrolysis, it should be understood that the instrumentalities proposed herein can also be used in different contexts, particularly other electrolysis methods such as AEL.

Due to the comparatively high pressure of the hydrogen formed in PEM electrolysis consumers can, in some cases, be supplied directly with hydrogen, without the need of further compression. The high current densities that can be used in PEM electrolysis result in comparatively low operating costs, especially in cases where dynamic electrical energy sources such as wind and solar power are used, where peaks in the energy supply cannot otherwise be utilised.

Furthermore, the polymer electrolyte used in PEM electrolysis enables the use of thin membranes of 100 to 200 µm, for example, at high pressures. This particularly leads to low ohmic losses which are primarily caused by the conduction of protons through the membrane and the formation of pressurised hydrogen.

Due to its solid structure, the polymer electrolyte membrane has a low gas transfer rate, which can lead to a very high product gas purity. This can be particularly advantageous for storage safety and for direct use, for example in a fuel cell.

The anode reaction in an PEM electrolysis is commonly referred to as an oxygen evolution reaction (OER). Here, the liquid (I) reactant water is fed to the catalyst and oxidised to give gaseous (g) oxygen, protons in aqueous solution (aq), and electrons:

2 H₂O (I) → O₂ (g) + 4 H⁺ (aq) + 4 e⁻

The cathode reaction is, on the other hand, commonly referred to as the hydrogen evolution reaction (HER). Here, the electrons supplied are combined with the protons channelled through the membrane to produce gaseous hydrogen:

4 H⁺ (aq) + 4 e⁻ > 2 H₂ (g)

In addition to hydrogen, the oxygen formed in corresponding electrolysis cells on the anode side can also be utilised.

In PEM electrolysis and other electrolysis methods, large amounts of water are typically withdrawn from the anode side. This water includes dissolved oxygen and further oxygen which is present in the form of oxygen bubbles. That is, a liquid phase withdrawn from the anode side may in actual fact be a heterogeneous mixture of oxygen and water. While significant progress has already been made to separate at least a part of this oxygen from the water, there is still the need for improvements.

### Summary

Against this background, a method for treating a heterogenous mixture comprising a gas and a liquid and corresponding apparatus comprising the features of the independent claims is proposed herein. Embodiments are the subject of the dependent claims and of the description that follows hereinbelow.

The method of treating a heterogeneous mixture comprising a gas and a liquid proposed herein comprises the steps of subjecting the heterogeneous mixture or a part thereof to a first separation step using a first separation unit and thereafter to a second separation step using a second separation unit, producing a remainder depleted in the gas and comprising at least a part of the liquid of the heterogeneous mixture, passing the remainder or a part thereof to a pump feed reservoir; and pumping the remainder from the pump feed reservoir. In the proposed method, the first separation step removes a first part of the gas from the heterogeneous mixture and the second separation step removes a second part of the gas from the heterogeneous mixture.

In PEM electrolysis, large quantities of water are circulated in order to limit the temperature rise of the water. The majority of the water remains, as mentioned, on the oxygen side of the membrane (anode). Downstream of the electrolyser, the gaseous oxygen in the water that exceeds solubility is to be separated. For this purpose, a degassing tank is conventionally used, which can be designed either vertically or horizontally. Without further installations, the oxygen bubbles require a certain amount of time, depending on their size and the flow direction of the water, to rise to the water surface due to the density difference and thus be considered separated. The longer the residence time of the water phase in the apparatus, the larger and more expensive it becomes. Very small bubbles can no longer be separated economically in this way. Small oxygen bubbles that are returned to the electrolyser can have a negative effect on performance and service life.

The method as proposed herein and its embodiments overcome this problem and provide for a rapid removal of oxygen to a high degree or almost completely. In comparison to certain solutions according to the prior art, the method provided herein and its embodiments provide advantages particularly in terms of flexibility and adaptability to various boundary conditions such as system configuration, installation, number of stacks, pumps, etc.

In the event of hydrogen permeating through the membrane of a PEM electrolyser to the oxygen (anode) side, an explosive mixture can form. In the event of an explosion or even detonation in the gas space of a partially filled container, a pressure wave may propagate via a liquid outlet and can damage downstream equipment such as pumps. For this reason, hydraulic decoupling of the liquid outlet from the separator chamber is advantageously provided. The method disclosed herein and its embodiments may provide for such a decoupling in a particularly advantageous manner.

As mentioned, the application of the method proposed herein is not limited to PEM electrolysis, but can also be used for other types of electrolysis, such as AEL, but may also be used in other contexts in which an improved degassing is required, such as systems for degassing amines in carbon dioxide capture.

That is, in certain embodiments, the heterogeneous mixture may be a mixture comprising oxygen and water, the heterogeneous mixture may particularly be provided using an electrolysis step, and the electrolysis step may particularly be performed using a proton exchange membrane. For the specific advantages of the proposed method and its embodiments in connection with such mixtures and production methods, reference is made to other places of the present disclosure.

In certain embodiments of the method proposed herein, a horizontal separator may be used as the first separation unit, and the second separation unit may comprise a coalescer. That is, according to the present invention, well-proven and established separators may be used, which, however, are inventively connected with each other in a particularly advantageous manner.

In a first group of embodiments as provided herein, the horizontal separator and the coalescer are provided in a first vessel and the pump feed reservoir is provided in a second vessel. In a second group of embodiments as provided herein, the horizontal separator is provided in a first vessel and the coalescer and the pump feed reservoir are provided in a second vessel. In both groups of embodiments, the first vessel is connected to the second vessel by an overflow tube.

The first group of embodiments is particularly advantageous for retrofitting existing separators in order to achieve hydraulic decoupling of the liquid phase to protect the pump from explosions or detonations. In the first group of embodiments, several first separators can also be connected with just one pump reservoir, i.e. a second vessel.

The second group of embodiments has several advantages as well. Since the second vessel also serves as a pump receiver, the available liquid volume can be used both for degassing and to provide residence time for the pump. Furthermore, the internals in the second vessel, i.e. the coalesce, are protected in the event of an explosion or detonation in the first vessel due to the hydraulic decoupling of both vessels. Only the more compact first vessel has to be subjected to increased testing.

When embodiments as proposed herein are used in an electrolysis system, for example, and a generously dimensioned header line is installed between the stacks and separator, it may even be possible to carry out a separation in the header. This allows for a modification of the second group of embodiments in which the second vessel is provided but the first vessel is dispensed with. That is, the stack is used as the first separator.

In further embodiments, several first separators can in principle also be integrated into a common vessel together with the second separator and the pump reservoir in a common vessel. Conversely, a first separator or, alternatively, a collective header can also feed several second separators. By deliberately separating and combining the first separator, second separator and pump reservoir functions, maximum design flexibility can be achieved. This is particularly advantageous for standardised skids, as it allows the existing skid dimensions to be utilised as effectively as possible.

The apparatus for treating a heterogeneous mixture comprising a gas and a liquid proposed herein comprises means configured for subjecting the heterogeneous mixture or a part thereof to a first separation step using a first separation unit and thereafter to a second separation step using a second separation unit, producing a remainder depleted in the gas and comprising at least a part of the liquid of the heterogeneous mixture, passing the remainder or a part thereof to a pump feed reservoir and pumping the remainder from the pump feed reservoir. The first separation step removes a first part of the gas from the heterogeneous mixture and the second separation step removes a second part of the gas from the heterogeneous mixture.

The apparatus proposed herein may particularly include, or be part of, an electrolysis arrangement as described herein.

As to further details and advantages of such an apparatus, reference is made to the explanations above in regarding the method proposed herein and its different embodiments. Particularly, such an apparatus may, in embodiments as proposed herein, comprise means adapted to perform a method according to any of the embodiments as discussed herein.

### Figures

Embodiments as disclosed herein will now be described, by way of example only, with reference to accompanying drawings, in which
Figure 1 illustrates an apparatus according to an embodiment; and
Figure 2 illustrates an apparatus according to an embodiment.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Herein, certain types of separators and internals thereof are referred to, including horizontal separators and coalescers. The terms used herein shall have the meaning customary in the field of gas-liquid separation, and reference may be made to expert literature. For example, according to M. Stewart and K. Arnold, "Gas-Liquid and Liquid-Liquid Separators", Gulf Equipment Guides, Gulf Professional Publishing 2008, chapter 3.3, separators may be designed and manufactured in horizontal, vertical, spherical and a variety of other configurations.

In a horizontal two-phase separator, as can be used for the first separation step as used in embodiments provided herein, fluid, i.e., a heterogeneous mixture of a gas and a liquid, enters the separator and my hit an inlet diverter, causing a sudden change in momentum. Gross separation is realized at the inlet, where the force of gravity causes the liquid droplets to fall out of the gas stream to the bottom of the vessel where it is collected. A gas outlet is provided with a mist extractor to hold back liquid droplets. Horizontal separators are typically smaller and less expensive than a vertical separator for a given gas and liquid flow rate.

As described in the literature cited above, particularly chapter 4.5, coalescers may be provided as coalescing plates and serve the purposed of causing the gas bubbles to merge and increase in size, improving the gravity separation thereof.

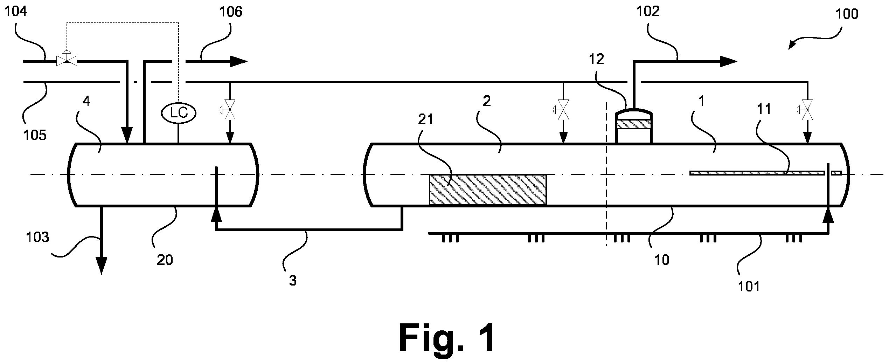

In Figure 1, an apparatus 100 according to an embodiment disclosed herein is illustrated. The embodiment of apparatus 100 corresponds to the "first group" of embodiments mentioned above.

Apparatus 100 comprises a first vessel 10 and a second vessel 20 which are connected via an overflow tube 3 defining a common liquid level in the first vessel 10 and the second vessel 20 which is indicated by a dash-dotted line. In the first vessel, a first separation unit 1 and a second separation unit 2 are provided, wherein the first and the second separation unit are provided as sections of an inner space of the first vessel 10 but are not necessarily separated from each other. A functional division between first separation unit 1 and second separation unit 2 is indicated in Figure 1 by a vertical dashed line. First separation unit 1 is a coarse gravity separator comprising an impingement plate 11 and a dome 12 including a mist extractor, e.g. in the form of a mesh, and second separation unit 2 is a fine separator comprising a coalescer 21, e.g. in the form of one or more coalescer plates.

A heterogeneous mixture of a gas and a liquid, which may in the example illustrated in Figure 1 comprise oxygen and water, may be fed into the first vessel 10 and the first separator therein via a feed line 101. Feed line 101 may, in the example illustrated, be connected to an electrolysis stack which is not illustrated for clarity. Gas may be withdrawn from dome 12 using a gas withdrawal line 102.

The heterogeneous mixture from which a part of the gas has been separated in first separator 1 passes through second separator and the coalescer 21 therein, where further gas is removed. A resulting liquid which is essentially free from heterogeneously admixed gas passes through overflow tube 3 to second vessel 20 which defines a pumping reservoir 4. From pumping reservoir 4, liquid is passed via a liquid outlet 103 to a pump, which is not shown for reasons of conciseness. To maintain a sufficient amount of liquid in the system, process water may be, on the basis of a liquid controller LC, via a line 104 into the second vessel 10.

Via a line 105 and corresponding valves, a purge gas may be fed into the first vessel 10 and the second vessel 20, particularly in order to avoid an explosive atmosphere therein as essentially explained above. A gas outlet from the second vessel is indicated with reference numeral 106.

In the embodiment shown in Figure 1, i.e. apparatus 100, the pump reservoir 4 or second vessel 10 also fulfils the purpose of hydraulic decoupling. All separation tasks are carried out in the first vessel 10. The degree of separation can be controlled by dimensioning the separator first vessel 10 and selecting the internals. In the event of an explosion or detonation in the first vessel 10, the internals may be damaged.

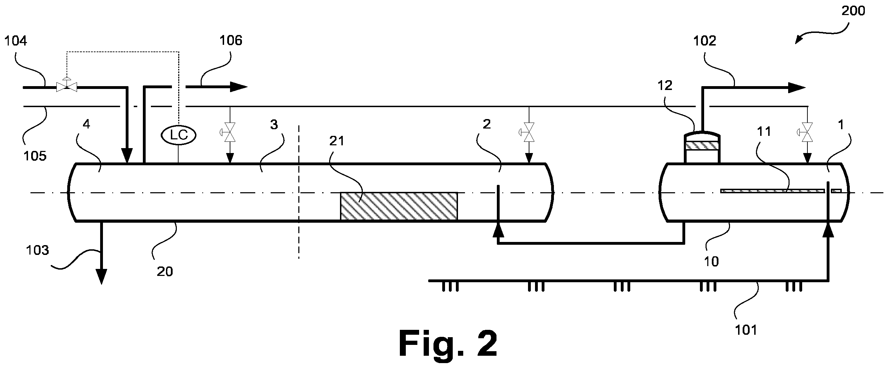

In Figure 2, an apparatus 200 according to an embodiment disclosed herein is illustrated. The embodiment of apparatus 200 corresponds to the "second group" of embodiments mentioned above.

The embodiment shown in Figure 2, i.e. apparatus 200, essentially differs from the embodiment shown in Figure 1, i.e. apparatus 100, in that the second separation unit 2 is not provided in the first vessel 10 but in the second vessel 20 which is therefore enlarged, while the first vessel 10 is reduced.

In the embodiment shown in Figure 2, i.e. apparatus 200, the heterogeneous mixture from which only a part of the gas has been removed passes via overflow tube 3 from the first vessel 10 to the second vessel 20 and is finely separated therein.

## Claims

1. A method of treating a heterogeneous mixture comprising a gas and a liquid, wherein the method comprises the steps of:
subjecting the heterogeneous mixture or a part thereof to a first separation step using a first separation unit (1) and thereafter to a second separation step using a second separation unit (2), producing a remainder depleted in the gas and comprising at least a part of the liquid of the heterogeneous mixture;
passing the remainder or a part thereof to a pump feed reservoir (4); and
pumping the remainder from the pump feed reservoir (4),
wherein the first separation step removes a first part of the gas from the heterogeneous mixture and the second separation step removes a second part of the gas from the heterogeneous mixture.

2. The method according to claim 1,
wherein the heterogeneous mixture is a mixture comprising oxygen and water.

3. The method according to claim 1 or 2,
wherein the heterogeneous mixture is provided using an electrolysis step.

4. The method according to claim 3,
wherein the electrolysis step is performed using a proton exchange membrane.

5. The method according to any of the preceding claims,
wherein a horizontal separator is used as the first separation unit (1), and
wherein the second separation unit (2) comprises a coalescer (21).

6. The method according to claim 5,
wherein the horizontal separator and the coalescer (21) are provided in a first vessel (10) and the pump feed reservoir (4) is provided in a second vessel (10).

7. The method according to claim 5,
wherein the horizontal separator is provided in a first vessel (10) and the coalescer (21) and the pump feed reservoir (4) are provided in a second vessel (10).

8. The method according to claim 6 or 7,
wherein the first vessel (10) is connected to the second vessel (20) by an overflow tube (3).

9. The method according to any one of claims 6 to 8,
wherein at least one of the first and the second vessel comprises explosion prevention means.

10. An apparatus (100, 200) for treating a heterogeneous mixture comprising a gas and a liquid, wherein the apparatus comprises means configured for:
subjecting the heterogeneous mixture or a part thereof to a first separation step using a first separation unit (1) and thereafter to a second separation step using a second separation unit (2), producing a remainder depleted in the gas and comprising at least a part of the liquid of the heterogeneous mixture;
passing the remainder or a part thereof to a pump feed reservoir (4); and
pumping the remainder from the pump feed reservoir (4),
wherein the first separation step removes a first part of the gas from the heterogeneous mixture and the second separation step removes a second part of the gas from the heterogeneous mixture.

11. The apparatus (100, 200) according to claim 10,
comprising means configured to perform a method according to any one of claims 1 to 9.
